# EUROPEAN PATENT APPLICATION

(11) **EP 1 975 773 A2**
(43) Date of publication of application: **01.10.2008**
(21) Application number: 08102926.6
(22) Date of filing: 26.03.2008
(51) Int. Cl.: G06F 3/12, G06F 3/03

(54) **Printing system**

(30) Priority: 27.03.2007 JP 2007081223
(71) Applicant: Oki Data Corporation, Tokyo 108-8551 (JP)
(72) Inventor: Ogashiwa, Akiyoshi, Minato-ku Tokyo 108-8551 (JP)
(74) Representative: Betten & Resch

(57) **Abstract**

A printing system is provided that allows coordinates of pen strokes written or drawn with a digital pen to be correctly related to coordinates of application data even when the application data is printed in reduced size. The printing system includes an application data generating unit generating an application data, an area table storing a boundary coordinate and an application data reduction rate of one of a plurality of areas of a position identification pattern, an application data reduction rate selection unit allowing selection of the application data reduction rate, an application data reduction unit reducing the application data by the application data reduction rate selected by the application data reduction selection unit, a print data generating unit generating a print data by combining the reduced application data and one of the plurality of areas of the position identification pattern having in the area table the application data reduction rate selected by the application data reduction rate selection unit; a print unit printing the print data on a recording medium; a digital pen reading the position identification pattern printed on the recording medium to recognize a first coordinate of the digital pen relative to the position identification pattern and transmitting the first coordinate to a coordinate recognition unit, and the coordinate recognition unit receiving the first coordinate from the digital pen and looking up the first coordinate in the area table to find the corresponding application data reduction rate, the coordinate recognition unit thereafter converting the first coordinate into a second coordinate relative to the application data in the original size based on the application data reduction rate.

## Description

### Background of the Invention

### 1. Area of the Invention

The present invention relates to a printing system allowing a user to input information with a digital pen.

### 2. Description of Related Art

A digital pen is an ordinary ink pen combined with a built-in camera continuously taking digital snapshots of a pattern of coded position information printed on the paper to recognize the coordinate of the current position of the digital pen based on the snapshot, thus converting each pen stroke written or drawn with the digital pen on the paper into digital information. The digital pen has been used in situations such as where handwritten information on a document need to be converted into the digital information as soon as it is written, and the digital pen is often used in customer service over counter and in medical scenes.

Published Japanese Translation of PCT Application No. 2003-511761 (hereinafter referred to as Pettersson) discloses an invention for printing various patterns of coded position information on the paper.

The pattern of coded position information disclosed in Pettersson is usually generated for the same-size printing in which one page of the application data is printed on one sheet of paper. Accordingly, the pattern of coded position information in Pettersson may become inconsistent with the application data where a user prints the application data of texts and figures on an information processing apparatus in the 2-up mode in which two pages of the application data are printed on one sheet of paper, the 4-up mode in which four pages thereof are printed on one sheet, and the like.

The inconsistency between the application data and the pattern of coded position information raises a problem that a pen stroke written or drawn on the paper with the digital pen may be incorrectly recognized as taking place at a position different from a corresponding position in the application data.

### Summary of the Invention

This invention is made in consideration of such a problem, and it is an object of the present invention to provide a printing system allowing the information processing apparatus to correctly recognize the position of pen strokes written or drawn on the paper with the digital pen in relative to the application data including texts, figures and the like even where the application data is printed on the paper in reduced-size.

To solve the above problem, the printing system of the present invention has a digital pen reading a printed position code pattern formed on a recording medium and having a unit digitalizing the printed position code pattern, an application unit generating an application data and printing-related information, an application data editing unit editing the application data generated by the application unit into a print data, a printed position code pattern data selection unit selecting a printed position code pattern data based on the printed position code pattern depending on the printing-related information, a print data combining unit composing a combined data from the print data edited by the application data editing unit and the printed position code pattern data selected by the printed position code pattern data selection unit, and a printing apparatus receiving the combined data and having a printing mechanism unit printing the combined data on the recording medium.

The printing system of the present invention causes the printed position code pattern data selection unit to select a printed position code pattern data readable by the digital pen based on the printed position code pattern depending on the printing-related information. Further, the printing system causes the print data combining unit to combine a combined data from the print data edited by the application data editing unit and the printed position code pattern data selected by the printed position code pattern data selection unit and to transmit the combined data to the printing apparatus. The printing apparatus receiving the combined data prints the combined data on the recording medium.

Therefore, the information processing apparatus of the present invention can accurately distinguish the printed position code pattern recognized with the digital pen even where the print format varies such as the same-size printing, 2-Up printing, 4-Up printing and the like. Thus, information written with the digital pen and the like can be positionally related to the application data including the original texts, figures, and the like.

### Detailed Description of the Drawings

This invention may take physical form in certain parts and arrangements of parts, a preferred embodiment and method of which will be described in detail in this specification and illustrated in the accompanying drawings which form a part hereof, and wherein:
Fig. 1 is a system configuration diagram of the printing system according to the first embodiment of the present invention;
Fig. 2 is a block diagram of a computer, a printing apparatus, and a digital pen according to the first embodiment of the present invention;
Fig. 3 is an Anoto pattern table according to the first embodiment;
Fig. 4 is a diagram describing the Anoto pattern table according to the first embodiment of this invention;
Fig. 5 is a flowchart describing the steps performed by the computer of the first embodiment to generate Anoto pattern;
Fig. 6 is a flowchart describing the steps performed by the computer to recognize the pen strokes written or drawn with the digital pen according to the first embodiment;
Fig. 7 is a system configuration diagram of the printing system according to the second embodiment of the present invention;
Fig. 8 is a block diagram of the computer, the printing apparatus, and the digital pen according to the second embodiment of the present invention;
Fig. 9 is the Anoto pattern table according to the second embodiment of the present invention;
Fig. 10 a flowchart describing the steps performed by the computer according to the second embodiment to generate Anoto pattern;
Fig. 11 is a flowchart describing the steps performed by the computer to recognize the pen strokes written or drawn with the digital pen according to the second embodiment;
Fig. 12 is a diagram describing an example of joined Anoto patterns according to the second embodiment;
Fig. 13 is a system configuration diagram of the printing system according to the third embodiment of the present invention;
Fig. 14 is a block diagram of a computer, a printing apparatus, and a digital pen according to the third embodiment of the present invention;
Fig. 15 is a flow chart describing the steps performed by the computer to display the superimposed image according to the third embodiment;
Fig. 16 is a system configuration diagram of the fourth embodiment;
Fig 17 is a block diagram of the computer, the printing apparatus, the digital pen, and the digital pen according to the fourth embodiment of the present invention;
Fig. 18 is a flowchart describing the steps performed by the computer to display the superimposed image according to the fourth embodiment;
Fig. 19 is a diagram describing a digital pen ID table of the fourth embodiment;
Fig. 20 is a system configuration diagram of the fifth embodiment of the present invention;
Fig. 21 a block diagram of the computer, the printing apparatus, and the digital pen according to the fifth embodiment of the present invention;
Fig. 22 is a flow chart performed by the computer to display the superimposed image according to the fifth embodiment; and
Fig. 23 is a diagram describing an Anoto pattern table of the fifth embodiment.

### Preferred Embodiments

### First Embodiment

Embodiments according to the present invention are hereinafter described in detail with reference to the figures.

First Embodiment

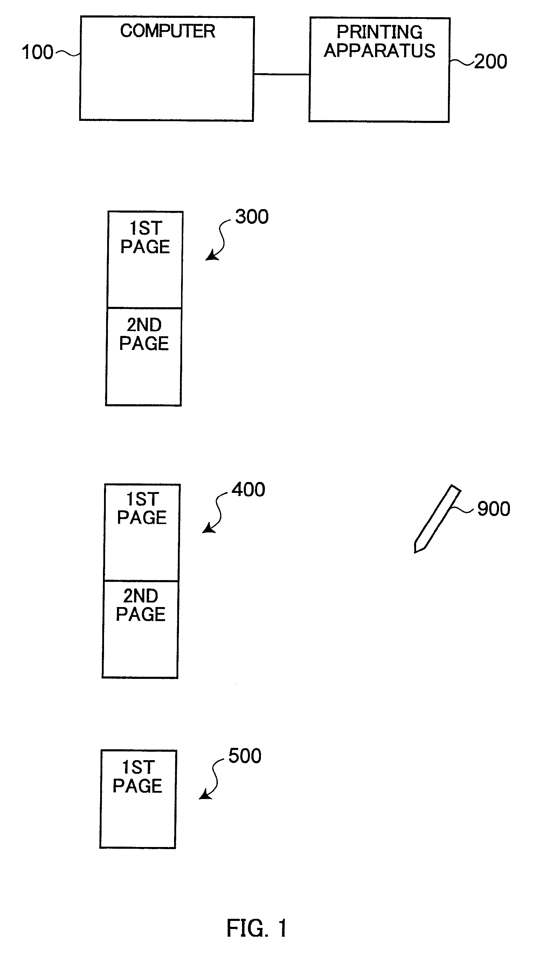

The first embodiment of the present invention is hereinafter described with reference to Figs. 1 to 5. Fig. 1 is a system configuration diagram of a printing system according to the first embodiment of the present invention. The printing system according to the first embodiment has a computer 100, a printing apparatus 200, an application data 300, an Anoto pattern data 400 corresponding to the pattern of coded position information for the same-size printing, an Anoto Pattern data 500 corresponding to the pattern of coded position information for the 2-Up reduced printing, and a digital pen 900. ANOTO is a trademark owned by Anoto AB CORPORATION who is an assignee of patents or patent applications related to the Anoto pattern, described later.

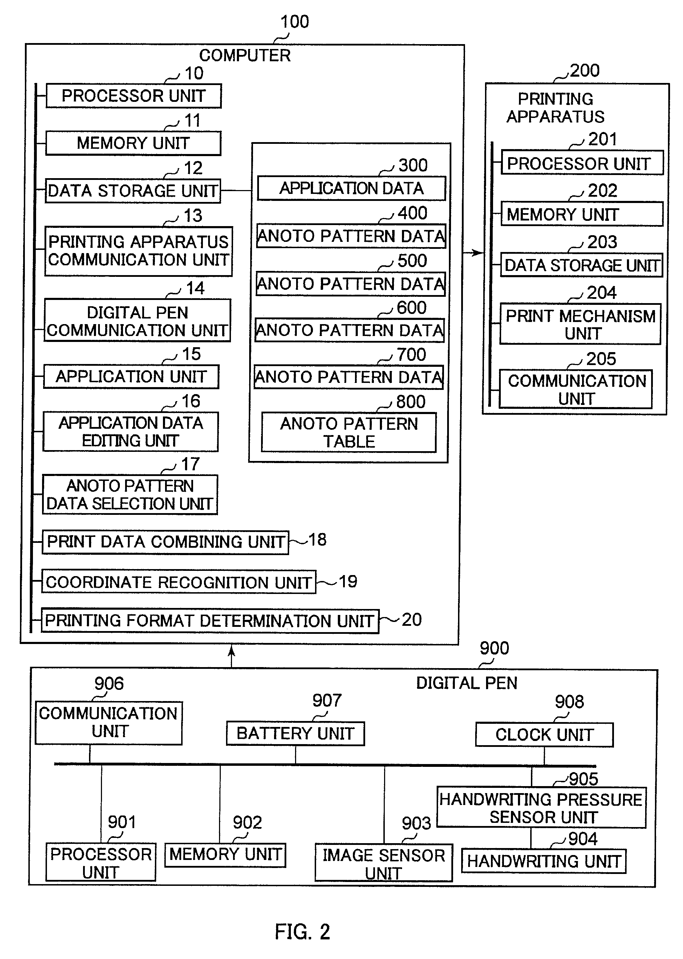

Fig. 2 is a block diagram of the computer 100, the printing apparatus 200, and the digital pen 900. The computer 100 has a processor unit 10, a memory unit 11, a data storage unit 12, a printing apparatus communication unit 13, a digital pen communication unit 14, an application unit 15, an application data editing unit 16, an Anoto Pattern data selection unit 17 selecting the pattern of coded position information based on printing-related information generated by the application unit, a print data combining unit 18, a coordinate recognition unit 19, and a printing format determination unit 20.

The processor unit 10 controls information processing in the computer 100. The memory unit 11 temporality stores data relating to the information processing of the processor unit 10, the application data editing unit 16, and the like.

The data storage unit 12 stores the application data 300 being one of the application data, the Anoto pattern data 400, the Anoto pattern data 500, an Anoto pattern data 600 corresponding to the pattern of coded position information for the 4-Up reduced printing, an Anoto pattern data 700 corresponding to the pattern of coded position information for the 8-Up reduced printing, and an Anoto pattern table 800 hereinafter described.

The printing apparatus communication unit 13 communicates with the printing apparatus 200. The digital pen communication unit 14 communicates with the digital pen 900.

The application unit 15 generates the application data and the printing-related information. The application data editing unit 16 edits the application data generated by the application unit 15 into print data. The Anoto Pattern data selection unit 17 selects one of Anoto pattern data stored in the data storage unit 12 depending on the printing-related information. The print data combining unit 18 superimposes the printing data over the selected Anoto pattern data to generate a combined data.

The coordinate recognition unit 19 calculates a coordinate of the position at which a user writes or draws a pen stroke made with the digital pen 900. The printing format determination unit 20 determines whether a printing format is the same-size printing based on a coordinate transmitted from the digital pen 900 calculated from the coded position information in the Anoto pattern.

The printing apparatus 200 has a processor unit 201 controlling various units in the printing apparatus 200, a memory unit 202 temporarily storing an image data during image processing, a data storage unit 203 storing the combined data transmitted from the computer 100, a print mechanism unit 204 processes an image based on the combined data and forming the image on a recording medium, and a communication unit 205 communicating with the computer 100.

The digital pen 900 has a processor unit 901 controlling the digital pen 900, a memory unit 902 temporarily storing the read Anoto pattern, an image sensor unit 903 reading out the Anoto pattern, a handwriting unit 904, a handwriting pressure sensor unit 905 detecting a handwriting pressure, a communication unit 906 communicating with the computer 100, a battery unit 907, and a clock unit 908.

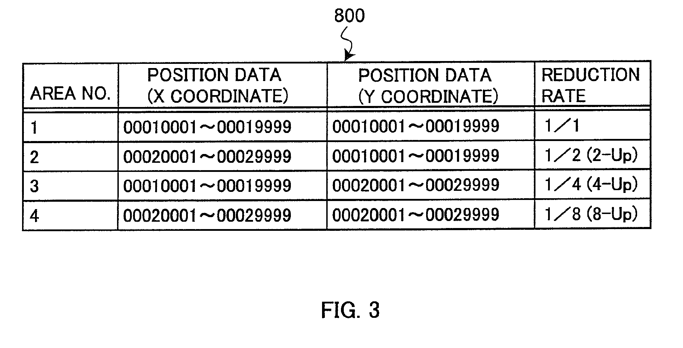

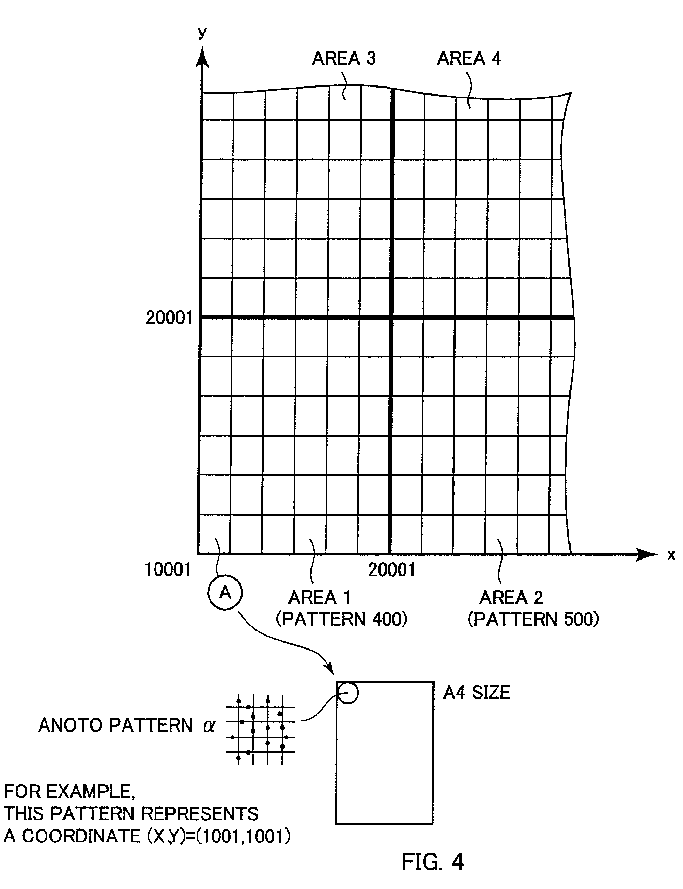

The Anoto pattern and the Anoto pattern table 800 are hereinafter described with reference to Figs. 3 and 4.

The Anoto pattern has multiple code windows, each of which has 36 dots arranged in 6 by 6 arrays. Each of the dots is slightly displaced from an intersection of longitudinal and lateral virtual lines to carry a coded position information. Each code window uniquely corresponds to a coordinate in a virtual coordinate system as shown in Fig. 4, and accordingly, the digital pen can convert the coded position information into a prescribed digital coordinate by taking the digital snapshot of 36 dots in 6 by 6 arrays of the Anoto pattern printed on the recording medium. In this way, the digital pen recognizes the position of itself, and each pen strokes with the digital pen 900 can be obtained as data of coordinates.

For example, where the digital pen reads the code window α of the Anoto pattern as shown in Fig. 4, the digital pen recognizes the coordinate (X,Y)=(10001,10001) corresponding to the code window α. The virtual coordinate system is divided into multiple areas. For example, Area 1 is the Anoto pattern data 400 that has code windows with x coordinates ranging from 10001 to 19999 and y coordinates ranging from 10001 to 19999. The Anoto pattern table 800 contains the range of coordinates of the code windows and a reduction rate of each area. For example, the Anoto pattern table 800 shows that the Area 1 has the x coordinates from 10001 to 19999 and y coordinates from 10001 to 19999 and is the pattern of coded position information for the same-size printing. The Anoto pattern data 500, 600, and 700 are similarly classified as Areas 2, 3, and 4, respectively, and have the reduction rates corresponding to the patterns of coded position information for 2-Up, 4-Up, and 8-Up, respectively. The Anoto pattern data selection unit 17 refers to the Anoto pattern table 800 and selects the Anoto pattern table depending on the printing-related information of the application data.

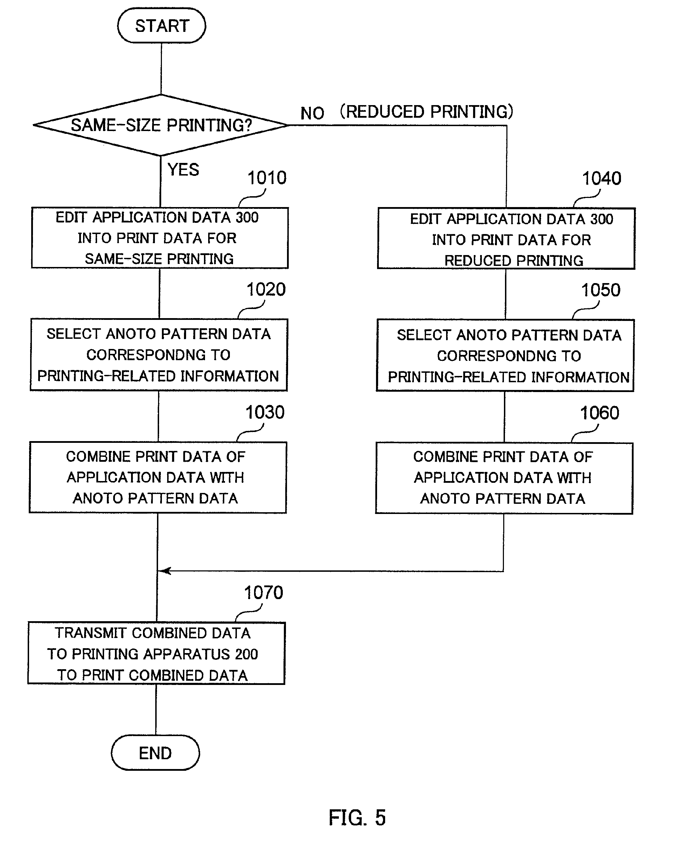

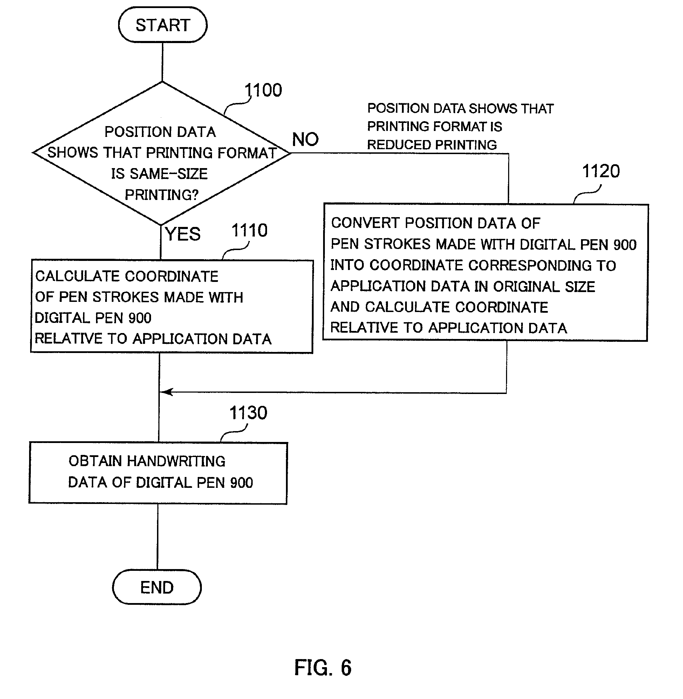

Fig. 5 is a flowchart describing the steps performed by the computer according to the first embodiment. Fig. 6 is a flowchart describing the steps performed by the computer to recognize the pen strokes written or drawn with the digital pen according to the first embodiment. The steps performed by the printing system according to the first embodiment are hereinafter described.

The computer 100 is connected to the printing apparatus 200. Where the same-size printing of the application data 300 is performed with the computer 100 and the printing apparatus 200, the processor unit 10 instructs the application data editing unit 16 to edit the application data 300 into the print data for the same-size printing, and the application data editing unit 16 edits the application data 300 into the print data for the same size printing at step 1010.

At step 1020, the processor 10 instructs the Anoto pattern data selection unit 17 to select the Anoto pattern corresponding to the printing-related information designating the same-size printing of the print data 300 from the Anoto pattern data in the Anoto pattern table 800, and the Anoto pattern data selection 17 selects the Anoto pattern data 400.

At step 1030, the print data combining unit 18 superimposes the print data edited by the application data editing unit 16 over the Anoto pattern data selected by the Anoto pattern data selection unit 17. The combined data is transmitted to the printing apparatus 200 by the printing apparatus communication unit 13. Then, the printing apparatus 200 receives the combined data and causes the print mechanism unit 204 to print on the recording medium the print data to which the Anoto pattern is added at step 1070.

On the other hand, where the 2-Up reduced printing of the application data 300 is performed with the computer 100 and the printing apparatus 200, the processor 10 instructs the application data editing unit 16 to edit the application data 300 into the print data for the 2-Up reduced printing, and the application data editing unit 16 edits the application data 300 into the print data for the 2-Up reduced printing at step 1040.

At step 1050, the processor unit 10 instructs the Anoto pattern data selection unit 17 to select the Anoto pattern data corresponding to the printing-related information designating the 2-Up reduced printing of the application data 300 from the Anoto pattern data in the Anoto pattern table 800, and the Anoto pattern data selection 17 selects the Anoto pattern data 500.

At step 1060, the print data combining unit 18 superimposes the print data edited by the application data editing unit 16 over the Anoto pattern data selected by the Anoto pattern data selection unit 17. The combined data is transmitted to the printing apparatus 200 by the printing apparatus communication unit 13. Then, the printing apparatus 200 receives the combined data and causes the print mechanism unit 204 to print on the recording medium the print data to which the Anoto pattern is added at step 1070.

When the pen stroke is written or drawn with the digital pen 900 on the recording medium having the Anoto pattern printed by the printing apparatus 200, the digital pen 900 causes the built-in image sensor 903 to keep on taking digital snapshots of the recording medium throughout the pen stroke to detect the coordinates or the position data of the Anoto pattern, and thus, what is written or drawn on the recording medium is obtained as a series of the coordinates of the pen strokes. The digital pen 900 transmits what is written or drawn with the digital pen 900 on the recording medium as the series of position data to the computer 100 via the communication unit 906.

The digital pen communication unit 14 of the computer 100 receives the series of position data transmitted from the digital pen 900. Then, the printing format determination unit 20 determines whether the printing format is the same-size printing based on the position data transmitted from the digital pen 900 at step 1100.

Then, the computer 100 looks up the position data transmitted from the digital pen 900 in the Anoto pattern table 800 to distinguish the printing format. Where the printing format is determined to be the same-size printing, the coordinate recognition unit 19 calculates the coordinates of the pen strokes made with the digital pen relative to the application data at step 1110. Where the printing format is determined to be the reduced printing, the coordinate recognition unit 19 converts the coordinates received from the digital pen into the coordinates corresponding to the application data in the original size and calculates the coordinates of the pen strokes made with the digital pen relative to the application data at step 1120.

After the processor unit 10 calculates the coordinates of the pen stroke made with the digital pen 900, the processor unit 10 obtains handwriting data of the digital pen 900 at step 1130.

The printing system according to the first embodiment enables the computer100 to accurately recognize the printing format of the combined data printed on the recording medium by looking up the position data transmitted from the digital pen 900 in the Anoto pattern table 800 even where the print format varies such as the same-size printing, 2-Up printing, 4-Up printing and the like. Thus, the computer 100 can positionally relate the pen stroke made with the digital pen and the like to the application data including the original texts, figures, and the like.

Second Embodiment

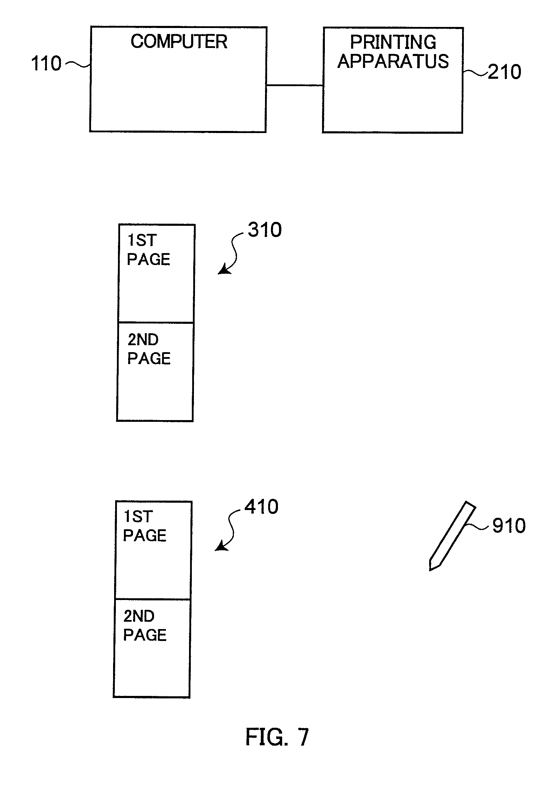

The second embodiment of the present invention is hereinafter described with reference to Figs. 7 to 12. Fig. 7 is a system configuration diagram of a printing system according to the second embodiment of the present invention.

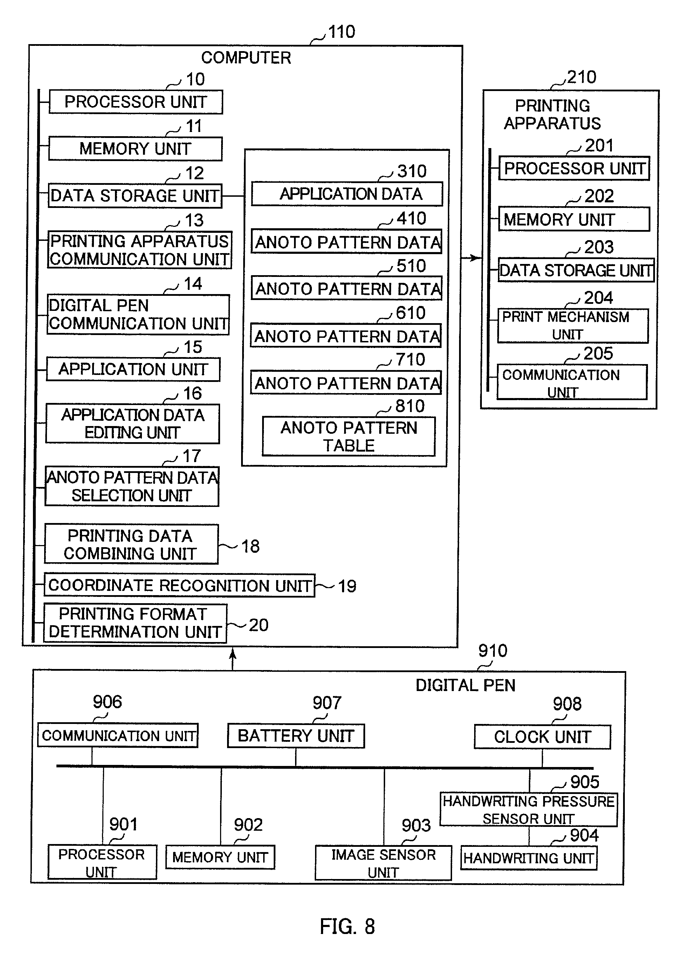

Fig. 8 is a block diagram of a computer 110, a printing apparatus 210, and a digital pen 910. The second embodiment is substantially the same as the first embodiment with respect to the system configuration, the internal configuration, and the like, and accordingly, the description thereabout is omitted.

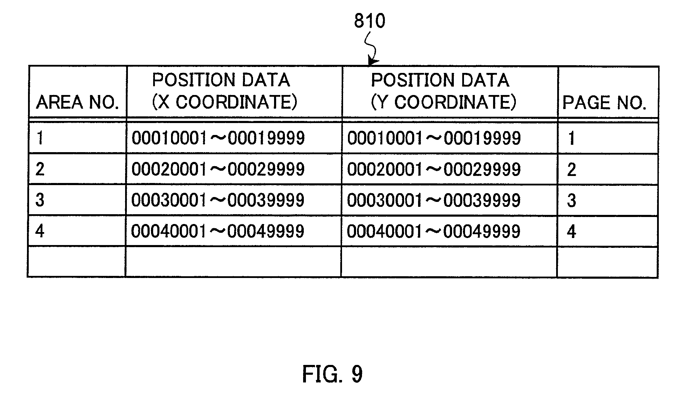

Fig. 9 shows an Anoto pattern table 810 according to the second embodiment. Each of the code windows of the Anoto pattern corresponds to a position in the virtual coordinate system. For example, an Anoto pattern data 410 of the Area 1 has x coordinates from 10001 to 19999 and y coordinates from 10001 to 19999 and corresponds to page 1.

In the same manner, Anoto pattern data 510, 610, and 710 are classified as areas 2, 3, and 4, respectively, and correspond to page 2, 3, and 4, respectively.

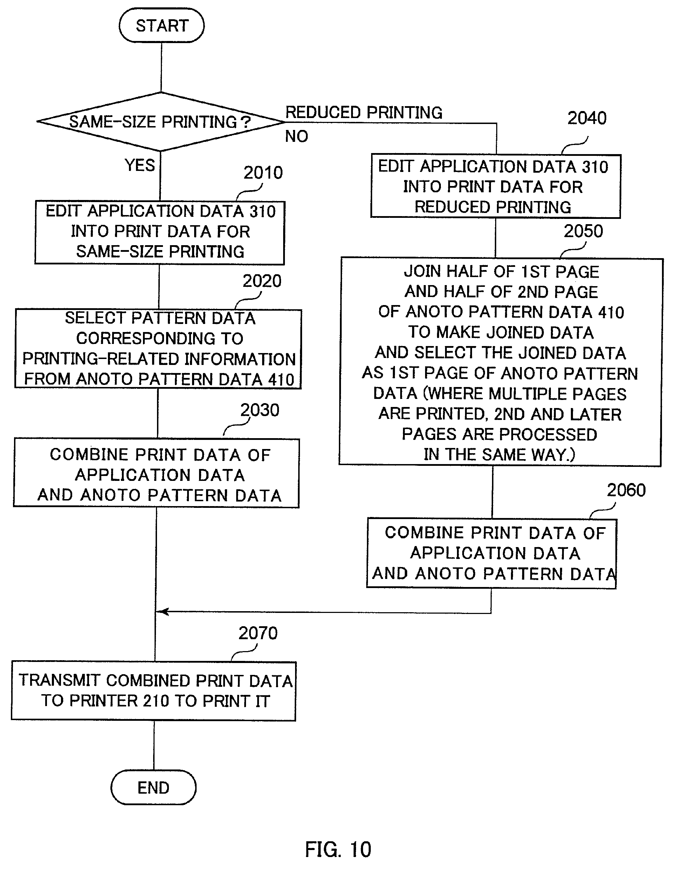

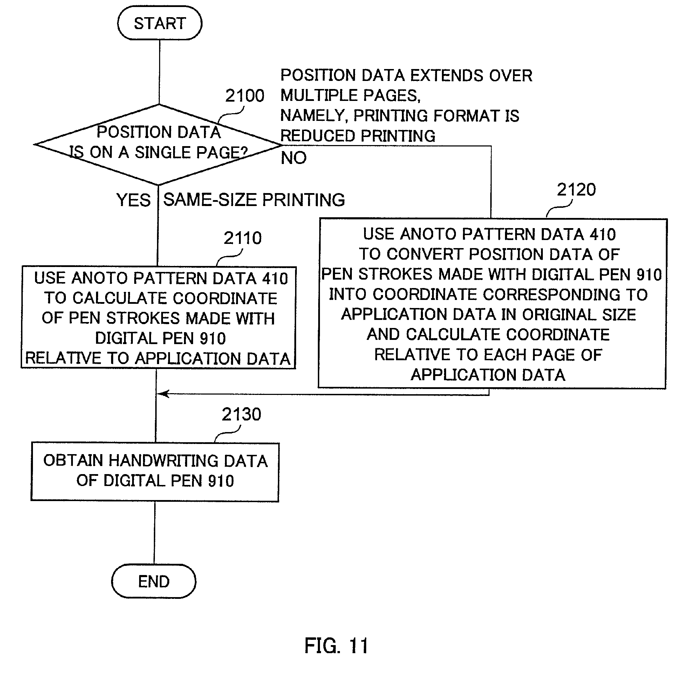

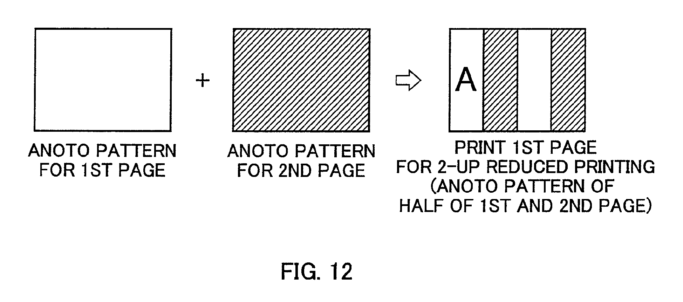

Fig. 10 a flowchart describing the steps performed by the computer according to the second embodiment. Fig. 11 is a flowchart describing the steps performed by the computer to recognize the pen strokes written or drawn with the digital pen according to the second embodiment. Fig. 12 is a diagram describing an example of joined Anoto patterns according to the second embodiment. The steps performed by the printing system according to the second embodiment are hereinafter described.

The computer 110 is connected to the printing apparatus 210. Where the same-size printing of application data 310 is performed with the computer 110 and the printing apparatus 210, the processor unit 10 instructs the application data editing unit 16 to edit the application data 310 into the print data for the same-size printing, and the application data editing unit 16 edits the application data 310 into the print data for the same size printing at step 2010.

At step 2020, the processor 10 instructs the Anoto pattern data selection unit 17 to select the Anoto pattern corresponding to the printing-related information designating the same-size printing of the print data 310 from the Anoto pattern data in the Anoto pattern table 810, and the Anoto pattern data selection 17 selects the Anoto pattern data 410.

At step 2030, the print data combining unit 18 superimposes the print data edited by the application data editing unit 16 over the Anoto pattern data selected by the Anoto pattern data selection unit 17. The combined data is transmitted to the printing apparatus 210 by the printing apparatus communication unit 13. Then, the printing apparatus 210 receives the combined data and causes the print mechanism unit 204 to print on the recording medium the print data to which the Anoto pattern is added at step 2070.

On the other hand, where the 2-Up reduced printing of the application data 310 is performed with the computer 110 and the printing apparatus 210, the processor 10 instructs the application data editing unit 16 to edit the application data 310 into the print data for the 2-Up reduced printing, and the application data editing unit 16 edits the application data 310 into the print data for the 2-Up reduced printing at step 2040.

At step 2050, the processor 10 instructs the Anoto pattern data selection unit 17 to join half of the first page of the Anoto pattern data 410 and half the second page of the Anoto pattern data 410 to make joined data of the first page pattern and the second page pattern, and also instructs the Anoto pattern data selection unit 17 to use the joined data as the first page of the Anoto pattern during the reduced printing of the print data, and the Anoto pattern data selection unit 17 selects this joined data.

At step 2060, the print data combining unit 18 superimposes the print data edited by the application data editing unit 16 over the Anoto pattern data selected by the Anoto pattern data selection unit 17. The combined data is transmitted to the printing apparatus 210 by the printing apparatus communication unit 13. Then, the printing apparatus 210 receives the combined data and causes the print mechanism unit 204 to print on the recording medium the print data to which the Anoto pattern is added at step 2070.

When the pen stroke is written or drawn with the digital pen 910 on the recording medium having the Anoto pattern printed by the printing apparatus 210, the digital pen 910 causes the built-in image sensor 903 to keep on taking digital snapshots of the recording medium throughout the pen stroke to detect the coordinates or the position data of the Anoto pattern, and thus, what is written or drawn on the recording medium is obtained as a series of the coordinates of the pen strokes. The digital pen 910 transmits what is written or drawn with the digital pen 910 on the recording medium as the series of position data to the computer 110 via the communication unit 906.

The digital pen communication unit 14 of the computer 110 receives the series of position data transmitted from the digital pen 910. Then, the printing format determination unit 20 looks up the position data transmitted from the digital pen 910 in the Anoto pattern table 810 to determine whether the position data are on a single page of the Anoto pattern data at step 2100.

Where the position data are on a single page of the Anoto pattern, namely, the printing format is determined to be the same-size printing, the coordinate recognition unit 19 calculates the coordinates of the pen strokes made with the digital pen relative to the application data at step 2110. Where the position data spreads on multiple pages of the Anoto pattern, namely, the printing format is determined to be the reduced printing, the coordinate recognition unit 19 converts the coordinates received from the digital pen into the coordinates corresponding to the application data in the original size and calculates the coordinates of the pen strokes made with the digital pen relative to the application data at step 2120.

After the processor unit 10 calculates the coordinates of the pen stroke made with the digital pen 910, the processor unit 10 obtains handwriting data of the digital pen 910 at step 2130.

The printing system according to the second embodiment enables the computer 110 to accurately recognize the printing format of the combined data printed on the recording medium by looking up the position data transmitted from the digital pen 910 in the Anoto pattern table 800 even where the print format varies such as the same-size printing, 2-Up printing, 4-Up printing and the like. Thus, the computer 100 can positionally relate the pen stroke made with the digital pen and the like to the application data including the original texts, figures, and the like.

Third Embodiment

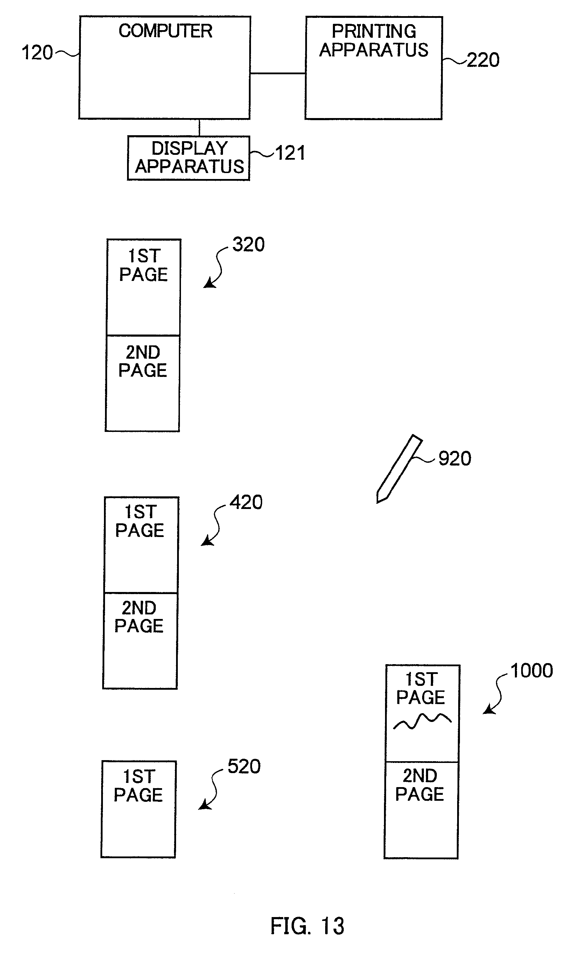

The third embodiment of the present invention is hereinafter described with reference to Figs. 13 to 15. Fig. 13 is a system configuration diagram of a printing system according to the third embodiment of the present invention. In addition to the printing system of the first embodiment, the printing system of the third embodiment has an superimposed image 1000 made by superimposing the position data of the pen strokes made with the digital pen over the distinguished original application data.

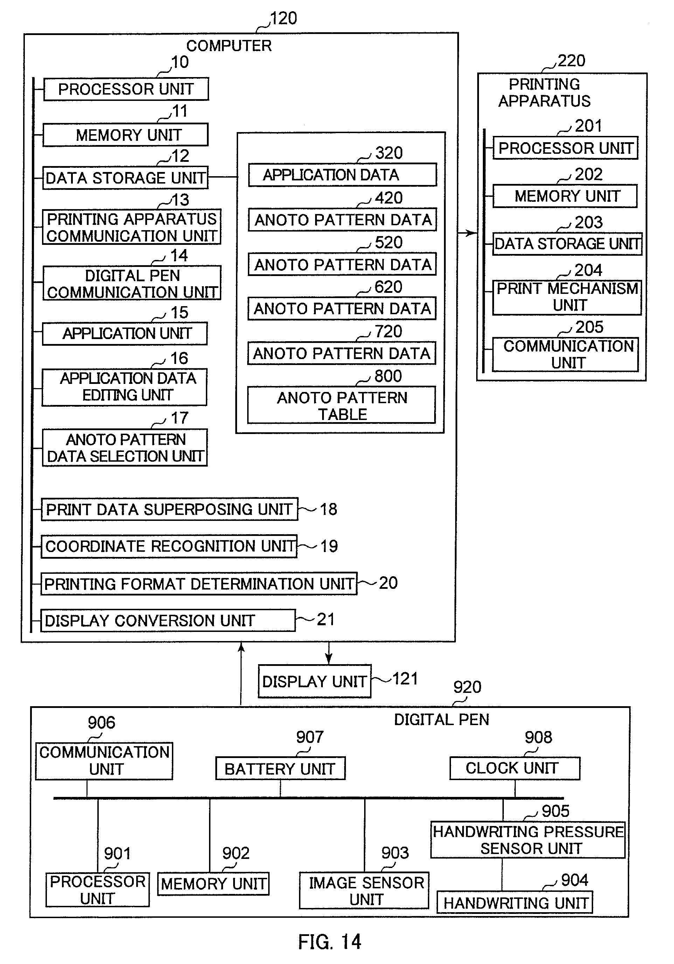

Fig. 14 is a block diagram of a computer 120, a printing apparatus 220, and a digital pen 920. The third embodiment is substantially the same as the first embodiment with respect to the system configuration and the like, and accordingly, the description thereabout is omitted. The difference of the third embodiment is that the computer 120 has an image conversion unit 21 superimposing the position data of the pen strokes made with the digital pen 920 over the application data 320, and that the printing system of the third embodiment further has a display apparatus 121 displaying the combined data.

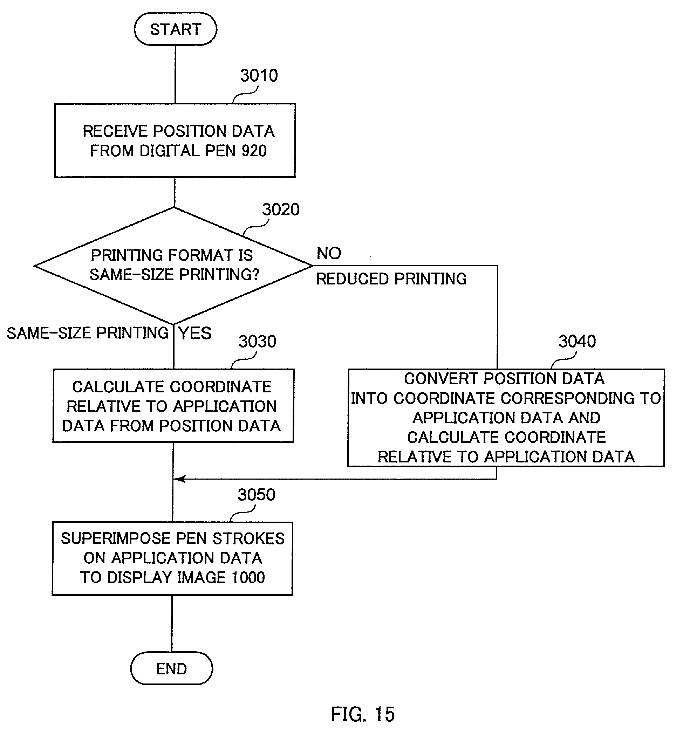

Fig. 15 is a flow chart describing the steps performed by the computer 120 to display the superimposed image according to the third embodiment. In the third embodiment, the coordinates of the Anoto pattern are divided depending on application software generating the application data. The Anoto pattern data selection unit selects the Anoto pattern data corresponding to the application software serving as application software identification information. The computer 120 causes the printing apparatus 220 to print on the recording medium the print data having the Anoto pattern selected by the Anoto pattern data selection unit according to the method described in the first and second embodiments. Thus, the digital pen can identify the application software having generated the application data at the application data unit 15 by detecting the Anoto pattern data printed on the recording medium that has been selected by the Anoto pattern data selection unit.

When the pen stroke is written or drawn with the digital pen 920 on the recording medium having the Anoto pattern printed by the printing apparatus 220, the digital pen 920 causes the built-in image sensor 903 to keep on taking digital snapshots of the recording medium throughout the pen stroke to detect the coordinates or the position data of the Anoto pattern, and thus, what is written or drawn on the recording medium is obtained as a series of the coordinates of the pen strokes. The digital pen 920 transmits what is written or drawn with the digital pen 920 on the recording medium as the series of position data to the computer 120 via the communication unit 906.

The digital pen communication unit 14 of the computer 120 receives the series of position data transmitted from the digital pen 920 at step 3010. Then, the printing format determination unit 20 looks up the position data transmitted from the digital pen 920 to determine whether the pen stroke are made on the recording medium having the Anoto pattern printed in the same-size printing or the reduced printing at step 3020.

Where the position data transmitted from the digital pen 920 shows that the printing format is the same-size printing, the coordinate recognition unit 19 calculates the coordinates of the pen strokes made with the digital pen 920 relative to the application data 320 at step 3030. Where the printing format is determined to be the reduced printing, the coordinate recognition unit 19 converts the coordinates received from the digital pen into the coordinates corresponding to the application data in the original size and calculates the coordinates of the pen strokes made with the digital pen 920 relative to the application data 320 at step 3040.

The display conversion unit 21 uses the coordinates of the pen stroke made with the digital pen 920 calculated by the coordinate recognition unit 19 to superimpose the handwriting made with the digital pen 920 over the original application data 320 whose application software has been distinguished, and displays the superimposed image 1000 on the display apparatus 121 at step 3050.

The printing system of the third embodiment enables a person other than a person who writes or draws with the digital pen to see what is written with the digital pen on the application data by referring to the display apparatus connected to the computer.

Fourth embodiment

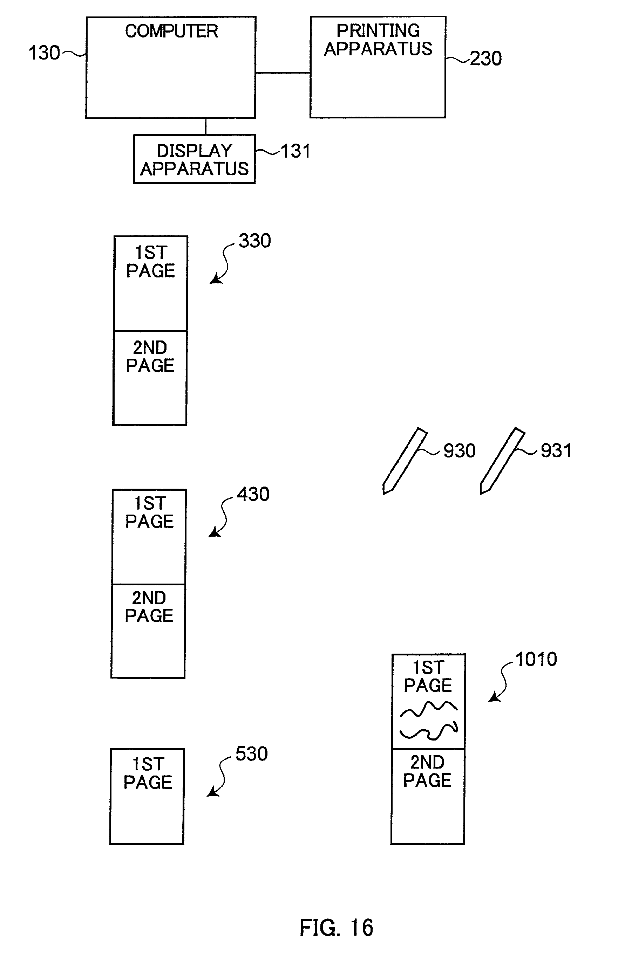

The fourth embodiment of the present invention is hereinafter described with reference to Figs. 16 to 19. Fig. 16 is a system configuration diagram of the fourth embodiment. The fourth embodiment is substantially the same as the third embodiment with respect to the system configuration except that there are the multiple digital pens in the fourth embodiment.

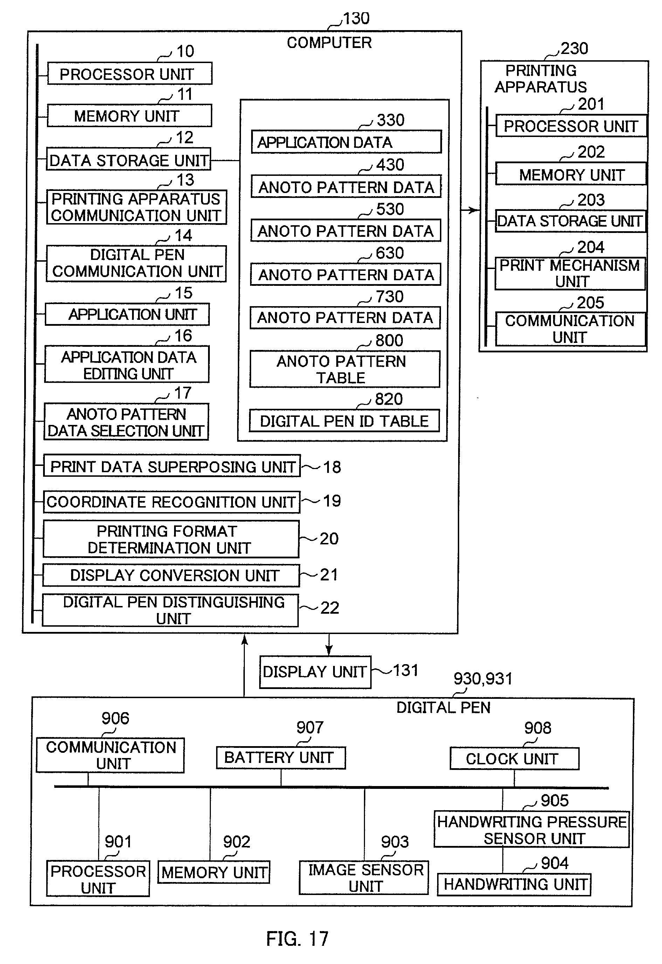

Fig 17 is a block diagram of a computer 130, the printing apparatus 230, the digital pen 930, and the digital pen 931. The fourth embodiment is substantially the same as the first embodiment with respect to the internal configuration and the like, and accordingly, the description thereabout is omitted. The computer 130 of the third embodiment has a digital pen distinguishing unit 22 distinguishing between the digital pen 930 and the digital pen 931, the image conversion unit 21 superimposing the position data of the pen strokes made with the digital pen 930 or the digital pen 931 over the application data 330, and a display apparatus 131 displaying the combined data.

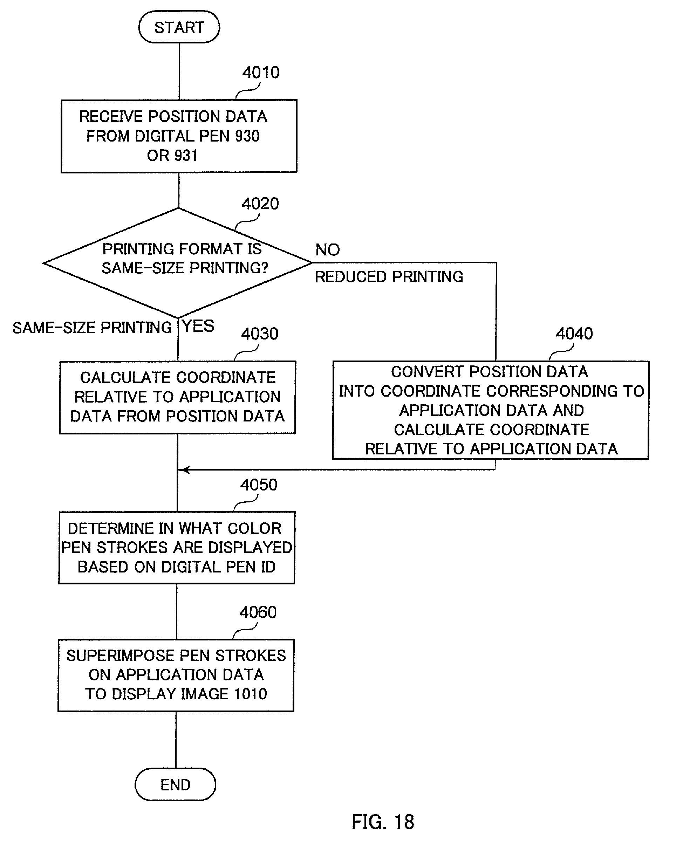

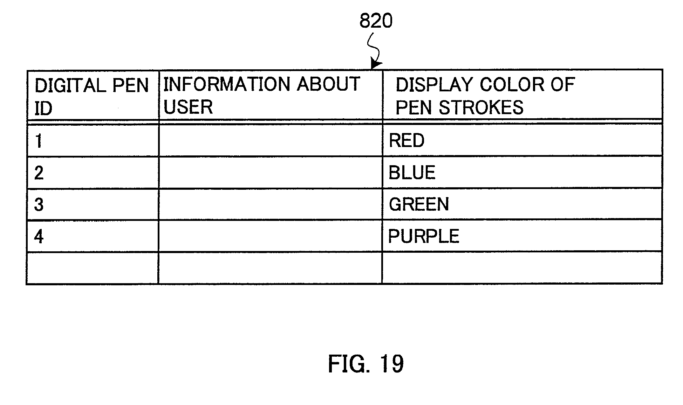

Fig. 18 is a flowchart describing the steps performed by the computer 130 to display the superimposed image according to the fourth embodiment. Fig. 19 is a diagram describing a digital pen ID table 820 of the fourth embodiment.

The computer 130 prints on the recording medium the print data to which the Anoto pattern is attached according to the methods described in the first or second embodiments.

When the pen stroke is written or drawn with the digital pen 930 or 931 on the recording medium having the Anoto pattern printed by the printing apparatus 200, the digital pen 930 or 931 causes the built-in image sensor 903 to keep on taking digital snapshots of the recording medium throughout the pen stroke made with the digital pen 930 or 931 to detect the coordinates or the position data of the Anoto pattern, and thus, what is written or drawn on the recording medium is obtained as a series of the coordinates of the pen strokes. The digital pen 930 or 931 transmits a digital pen ID of itself and what is written or drawn with the digital pen 930 or 931 on the recording medium as the series of position data to the computer 130 via the communication unit 906.

The digital pen communication unit 14 of the computer 130 receives the position data from the digital pen 930 or the digital pen 931 at step 4010. Then, the digital pen distinguishing unit 22 determines from which of the digital pens the position data is transmitted. The printing format determination unit 20 determines whether the printing format is the same-size printing or the reduced printing based on the position data transmitted from the digital pen 900 or 931 at step 4020.

Where the position data transmitted from the digital pen 930 or 931 shows that the printing format is the same-size printing, the coordinate recognition unit 19 calculates the coordinates of the pen strokes made with the digital pen 930 or 931 relative to the application data 330 at step 4030. Where the printing format is determined to be the reduced printing, the coordinate recognition unit 19 converts the coordinates received from the digital pen into the coordinates corresponding to the application data in the original size and calculates the coordinates of the pen strokes made with the digital pen 930 or 931 relative to the application data 330 at step 4040.

At step 4050, the processor 10 looks up the individual digital pen ID of the digital pen 930 or 931 in the digital pen ID table 820 to determine in what color the pen strokes of the digital pens are displayed.

The display conversion unit 21 uses the coordinates of the pen strokes made with the digital pen 930 or 931 calculated by the coordinate recognition unit 19 to superimpose the pen strokes made with the digital pen 930 or 931 over the original application data 330 whose application software has been distinguished, and displays a superimposed image 1010 on the display apparatus 131 at step 3050.

The printing system of the fourth embodiment enables a third person other than those having written or drawn with the digital pens to distinguish who has made all the pen strokes on the application data by seeing the display apparatus connected to the computer even where the multiple digital pens are used to write or draw on the recording medium.

Fifth embodiment

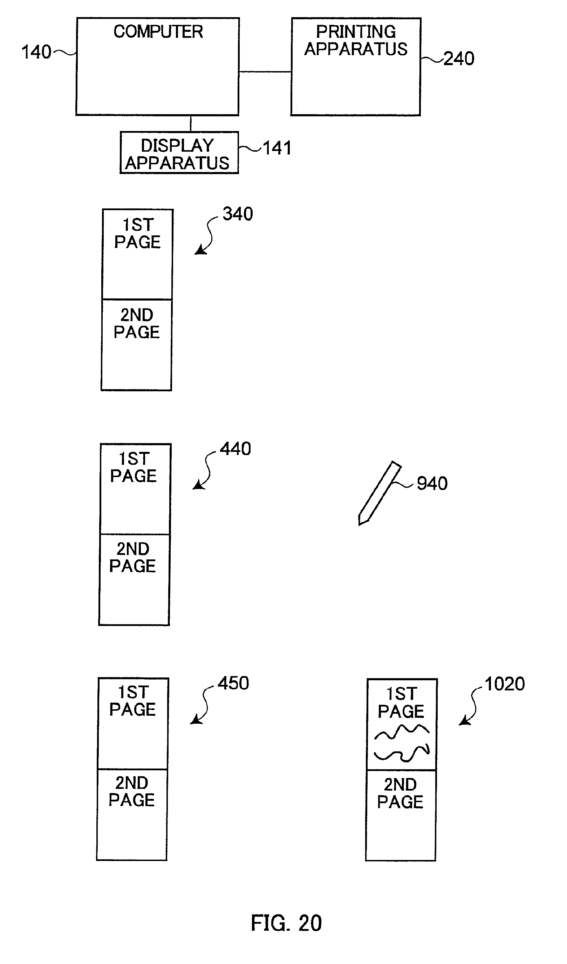

The fifth embodiment of the present invention is hereinafter described with reference to Figs 20 to 23. Fig. 20 is a system configuration diagram of the fifth embodiment of the present invention. The printing system of the fifth embodiment has a computer 140 serving as an information processing apparatus, a printing apparatus 240, an application data 340, an Anoto pattern data 440 of the pattern of coded position information for the same-size printing for documents distributed to recipient 1, an Anoto pattern data 450 of the pattern of coded position information for the same-size printing for documents distributed to recipient 1, a digital pen 940, and a superimposed image 1020 made by superimposing the position data of the pen strokes made with the digital pen over the distinguished original application data.

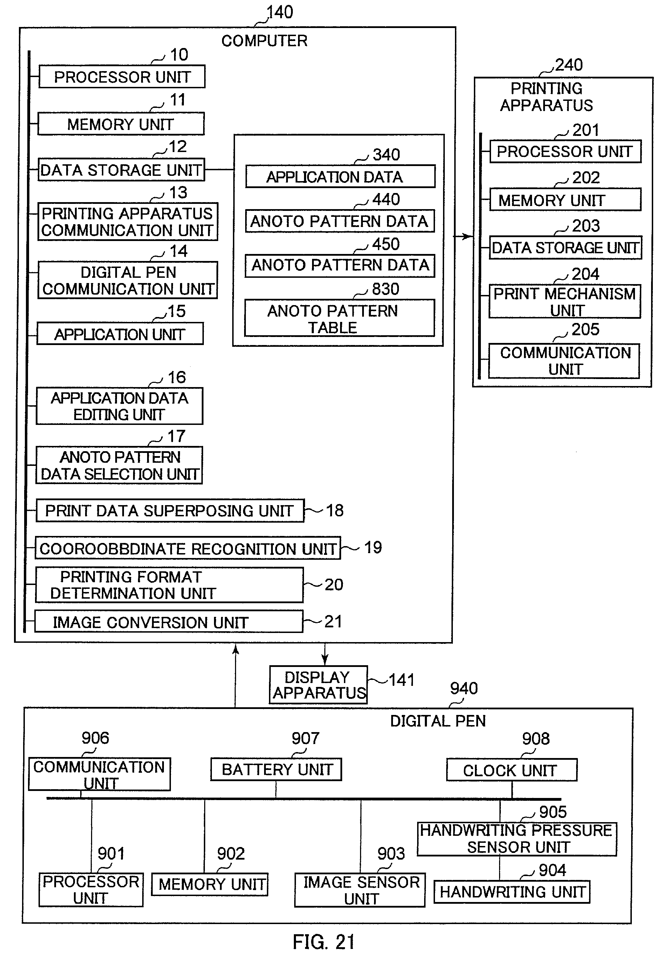

Fig. 21 a block diagram of a computer 140, a printing apparatus 240, and the digital pen 940. The fifth embodiment is substantially the same as the first embodiment with respect to the system configuration and the like, and accordingly, the description thereabout is omitted. The computer 140 of the fifth embodiment has the application data 340, the image conversion unit 21 superimposing the pen strokes of the digital pen 940 over the application data 340, and an display apparatus 141 displaying the combined data.

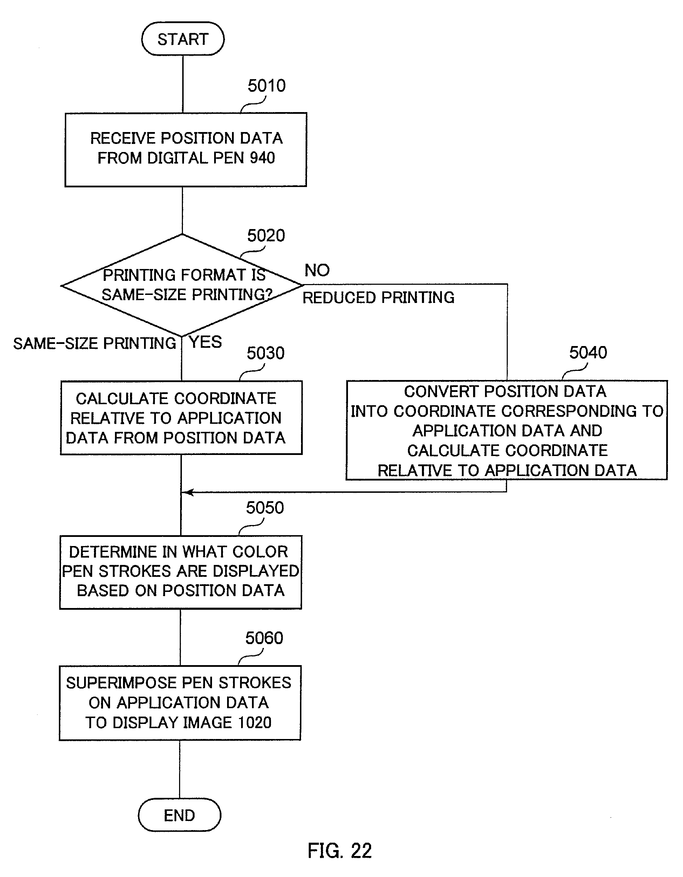

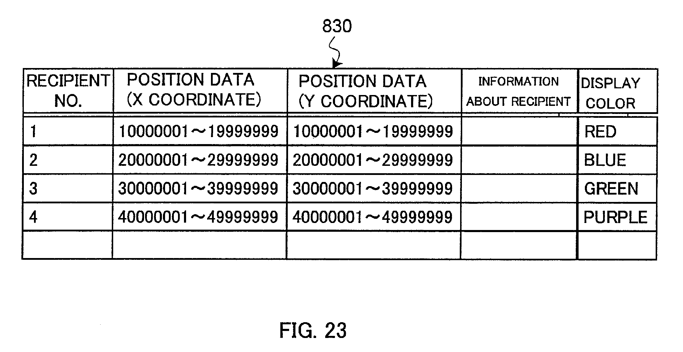

Fig. 22 is a flow chart performed by the computer 140 to display the superimposed image according to the fifth embodiment. Fig. 23 is a diagram describing an Anoto pattern table 830 of the fifth embodiment.

The computer 140 prints on the recording medium the print data to which the Anoto pattern is attached according to the methods described in the first or second embodiments. The coordinates of the Anoto pattern are divided depending on recipients to which the printed documents are distributed, and a specific color is assigned to each recipient so that the pen strokes made by people in that recipient are displayed on the display apparatus in that color.

When the pen stroke is written or drawn with the digital pen 940 on the recording medium having the Anoto pattern printed by the printing apparatus 240, the digital pen 940 causes the built-in image sensor 903 to keep on taking digital snapshots of the recording medium throughout the pen stroke made with the digital pen 940 to detect the coordinates or the position data of the Anoto pattern, and thus, what is written or drawn on the recording medium is obtained as a series of the coordinates of the pen strokes. The digital pen 940 transmits what is written or drawn with the digital pen 940 on the recording medium as the series of position data to the computer 130 via the communication unit 906.

The digital pen communication unit 14 of the computer 140 receives the position data from the digital pen 940 at step 5010. Then, the printing format determination unit 20 determines whether the printing format is the same-size printing or the reduced printing based on the position data transmitted from the digital pen 940 at step 5020.

Where the position data transmitted from the digital pen 940 shows that the printing format is the same-size printing, the coordinate recognition unit 19 calculates the coordinates of the pen strokes made with the digital pen 940 relative to the application data 340 at step 4030. Where the printing format is determined to be the reduced printing, the coordinate recognition unit 19 converts the coordinates received from the digital pen into the coordinates corresponding to the application data in the original size and calculates the coordinates of the pen strokes made with the digital pen 940 relative to the application data 340 at step 4040.

At step 5050, the processor 10 looks up the position data of the pen strokes of the digital pen 940 in the Anoto pattern table 830 to determine in what color the pen strokes of the digital pens are displayed. The display conversion unit 21 uses the coordinates of the pen strokes made with the digital pen 940 calculated by the coordinate recognition unit 19 to superimpose the pen strokes made with the digital pen 940 over the original application data 340 whose application software has been distinguished, and displays a superimposed image 1020 on the display apparatus 141 at step 5060.

As described above, the fifth embodiment enables a person other than a person who writes or draws on the application data with the digital pen to distinguish which pen strokes are made by people of what recipient by seeing the color of the pen strokes displayed on the display apparatus connected to the computer even where people in multiple recipients writes or draws on the recording medium with the digital pen.

Each of the above embodiments are preferred embodiments of the present invention, but the invention is not limited thereto. Each structure of the embodiments can be arbitrary changed without deviating from the subject matter of the present invention.

In the first and second embodiments, a user prints the print data having the attached Anoto pattern by causing the computer to superimpose the print data over the Anoto pattern previously stored in the computer and thereafter causing the computer to transmit the combined data to the printing apparatus. However, this invention is not limited thereto, and the Anoto pattern may be previously stored in the printing apparatus, and the application data may be superimposed over the Anoto pattern in the printing apparatus.

The Anoto pattern may be stored in an external memory apparatus, and the application data may be superimposed on the Anoto pattern when the application data is printed.

In the second embodiment, the digital pen detects the existence of the multiple different Anoto patterns on a single sheet, and the computer recognizes that the application data is printed in the reduced printing based on the detection. However, the invention is not limited thereto, and the recording medium may be printed with the Anoto pattern having a coded magnification information showing that the application data is printed in the reduced printing. Alternatively, the digital pen does not necessarily detect the pattern of the coded position information showing that the application data is printed in the reduced printing, and instead a button or an icon and the like on the computer may be used to specify that the application data is printed in the reduced printing.

In the third, fourth, and fifth embodiment, the display apparatus connected to the computer displays the superimposed image made by superimposing the pen strokes of the digital pen over the original application data. However, the invention is not limited thereto, and the superimposed image may be displayed on the display apparatus connected to another computer connected via the network and the like after the image is transferred to the another computer.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention should not be limited by the specification, but be defined by the claims set forth below.
According to one embodiment there is provided a printing system that allows coordinates of pen strokes written or drawn with a digital pen to be correctly related to coordinates of application data even when the application data is printed in reduced size. The printing system includes an application data generating unit generating an application data, an area table storing a boundary coordinate and an application data reduction rate of one of a plurality of areas of a position identification pattern, an application data reduction rate selection unit allowing selection of the application data reduction rate, an application data reduction unit reducing the application data by the application data reduction rate selected by the application data reduction selection unit, a print data generating unit generating a print data by combining the reduced application data and one of the plurality of areas of the position identification pattern having in the area table the application data reduction rate selected by the application data reduction rate selection unit; a print unit printing the print data on a recording medium; a digital pen reading the position identification pattern printed on the recording medium to recognize a first coordinate of the digital pen relative to the position identification pattern and transmitting the first coordinate to a coordinate recognition unit, and the coordinate recognition unit receiving the first coordinate from the digital pen and looking up the first coordinate in the area table to find the corresponding application data reduction rate, the coordinate recognition unit thereafter converting the first coordinate into a second coordinate relative to the application data in the original size based on the application data reduction rate.

## Claims

1. A printing system comprising:
a digital pen reading a printed position code pattern formed on a recording medium
and having a unit digitalizing the printed position code pattern;
an application unit generating an application data and printing-related information;
an application data editing unit editing the application data generated by the application unit into a print data;
a printed position code pattern data selection unit selecting a printed position code pattern data based on the printed position code pattern depending on the printing-related information;
a print data combining unit composing a combined data from the print data edited by the application data editing unit and the printed position code pattern data selected by the printed position code pattern data selection unit; and
a printing apparatus receiving the combined data and having a printing mechanism unit printing the combined data on the recording medium.

2. The printing system according to claim 1, wherein the printed position code pattern is an Anoto pattern.

3. The printing system according to claim 1 or 2, wherein the printing-related information includes printing configuration information of the application data.

4. The printing system according to one of claims 1 or 3, wherein the printing-related information includes application identification information identifying the application data generated by the application unit.

5. The printing system according to one of the preceding claims, wherein the printed position code pattern data selection unit selects a prescribed area of the printed position code pattern form the Anoto pattern of a prescribed size based on the printing-related information to generate the printed position code pattern data.

6. The printing system according to one of the preceding claims, wherein the Anoto pattern corresponds to coordinate information based on the printing-related information.

7. The printing system according to one of the preceding claims further comprising:
a digital pen distinguishing unit distinguishing a plurality of the digital pens; and
a display conversion unit composing a combined data from the application data and a data input with the digital pen to display on the display unit the combined data in which colors are changed depending the digital pens distinguished by the digital pen distinguishing unit.

8. The printing system according to one of the preceding claims further comprising:
an application unit generating printing-related information including a plurality of recipient data of recipients of the recording medium; and
a display conversion unit composing a combined data from the application data and a data input with the digital pen to display on the display unit the combined data in which colors are changed depending the recipients of the recording medium.

9. A printing system comprising:
an application data generating unit generating an application data;
an area table storing a boundary coordinate and an application data reduction rate of one of a plurality of areas of a position identification pattern;
an application data reduction rate selection unit allowing selection of the application data reduction rate;
an application data reduction unit reducing the application data by the application data reduction rate selected by the application data reduction selection unit;
a print data generating unit generating a print data by combining the reduced application data and one of the plurality of areas of the position identification pattern having in the area table the application data reduction rate selected by the application data reduction rate selection unit;
a print unit printing the print data on a recording medium;
a digital pen reading the position identification pattern printed on the recording medium to recognize a first coordinate of the digital pen relative to the position identification pattern and transmitting the first coordinate to a coordinate recognition unit; and
the coordinate recognition unit receiving the first coordinate from the digital pen and looking up the first coordinate in the area table to find the corresponding application data reduction rate, the coordinate recognition unit thereafter converting the first coordinate into a second coordinate relative to the application data in the original size based on the application data reduction rate.

10. The printing system according to claim 9, wherein one of the area of the position identification pattern is further divided into multiple sub areas one of which is assigned to application software, and wherein the area table further storing an identification of the application software corresponding to the one of the plurality of sub areas of the position identification pattern, and wherein the coordinate recognition recognizes the application software by looking up the first coordinate in the area table.

11. The printing system according to claim 9 or 10, wherein the printing system comprising the plurality of digital pens, and one of the plurality of digital pens has an unique digital pen ID and transmits the digital pen ID of the one of the plurality of digital pens to the coordinate recognition unit, and wherein the coordinate recognition unit recognizes the digital pen ID transmitted from the digital pen.

12. The printing system according to one of claims 9 to 11, wherein one of the areas of the position identification pattern is further divided into multiple sub areas one of which is assigned to a recipient, and wherein the area table further storing an identification of the recipient corresponding to the one of the plurality of sub areas of the position identification pattern, and wherein the coordinate recognition recognizes the recipient by looking up the first coordinate in the area table.
